# FASCICULE DE BREVET EUROPEEN

(11) **EP 2 328 956 B1**
(45) Date de publication et mention de la délivrance du brevet: **05.03.2014**
(21) Numéro de dépôt: 09748393.7
(22) Date de dépôt: 15.09.2009
(51) Int. Cl.: C08J 3/24, C08F 8/30

(54) **NOUVEAU MATERIAU ELASTOMERE ET SON PROCEDE D'OBTENTION**
NEUES ELASTOMERMATERIAL UND HERSTELLUNGSVERFAHREN DAFÜR
NOVEL ELASTOMER MATERIAL, AND METHOD FOR OBTAINING SAME

(30) Priorité: 18.09.2008 FR 0856270
(43) Date de publication de la demande: 08.06.2011
(73) Titulaire: ARKEMA FRANCE, 92700 Colombes (FR)
(72) Inventeur: HIDALGO, Manuel, F-69530 Brignais (FR); DEBAUD, Fabien, F-69005 Lyon (FR)
(74) Mandataire: Lhoste, Catherine
(86) Numéro de dépôt international: PCT/FR2009/051733
(87) Numéro de publication internationale: WO 2010/031956

(56) Documents cités:
- DE-A1- 10 131 659
- US-A1- 2004 010 090
- US-A1- 2004 059 060
- US-A1- 2008 175 139
- YOUNG-WOOK CHANG; MISHRA J K; JONG-HOON CHEONG; DONG-KOOK KIM E: "Thermomechanical properties and shape memory effect of epoxidized natural rubber crosslinked by 3-amino-1,2,4-triazole" POLYMER INTERNATIONAL, vol. 56, 2007, pages 694-698, XP002520252
- SCHADEBRODT J ET AL: "NEW THERMOREVERSIBLE AND COMBINED NETWORKS VIA HYDROLILYLATION WITHNEUTRAL PT(II)-COMPLEXES" KAUTSCHUK UND GUMMI - KUNSTSTOFFE, HUTHIG VERLAG, HEIDELBERG, DE, vol. 52, no. 9, 1 septembre 1999 (1999-09-01), pages 555-564, XP000859668 ISSN: 0948-3276
- HILGER C ET AL: "Multiphase thermoplastic elastomers by combination of covalent and association chain structures: 2. Small-strain dynamic mechanical properties" POLYMER, ELSEVIER SCIENCE PUBLISHERS B.V, GB, vol. 31, no. 5, 1 mai 1990 (1990-05-01), pages 818-823, XP024115355 ISSN: 0032-3861 [extrait le 1990-05-01]
- CHINO K; ASHIURA M: "Thermoreversible cross-linking rubber using supramolecular hydrogen-bonding networks" MACROMOLECULES, vol. 34, no. 26, 18 décembre 2001 (2001-12-18), pages 9201-9204, XP002520253
- DATABASE COMPENDEX [Online] ENGINEERING INFORMATION, INC., NEW YORK, NY, US; 2005, NAKAMURA K-I ET AL: "Polymer networks with thermoreversible crosslinks" XP002520254 Database accession no. E2006159817172 & POLYMER PREPRINTS, JAPAN - 54TH SPSJ SYMPOSIUM ON MACROMOLECULES - POLYMER PREPRINTS, JAPAN 2005 SOCIETY OF POLYMER SCIENCE JP, vol. 54, no. 2, 2005, page 3668,

## Description

L'invention concerne un matériau élastomère comprenant des ponts de réticulation à liaisons covalentes, obtenus par réticulation chimique permanente non thermo-réversible et d'autre part des ponts de réticulation à liaisons non covalentes, notamment thermo-réversibles obtenus par modification des chaînes de polymères de manière à les rendre porteuses de groupements associatifs capables de former lesdites liaisons non covalentes. La modification des chaînes avec les groupements associatifs peut être faite par fonctionnalisation, notamment à l'aide de monomères fonctionnels utilisés lors de la polymérisation ou par greffage.

Il est bien connu que les matériaux élastomères, trouvent l'essentiel de leurs bonnes propriétés d'application lorsqu'ils sont réticulés. La réticulation des élastomères leur apporte, non seulement une amélioration des propriétés mécaniques, mais aussi un allongement des plages de température dans lesquelles ils gardent les propriétés élastiques et de souplesse qui les caractérisent.

Ainsi par exemple, le caoutchouc naturel, issu du latex de l'arbre à caoutchouc nécessite de la réticulation pour trouver toutes ses propriétés de stabilité dimensionnelle et d'élasticité ; sans la réticulation, le caoutchouc naturel est une matière collante peu utile dans la plupart de cas.

Aussi bien le caoutchouc naturel que sa réticulation pour le rendre utile étaient déjà connus des civilisations pré-colombiennes comme les mayas qui s'en servaient, entre autre, pour la fabrication de balles rebondissantes utilisées dans le très répandu jeu de pelote. Les méthodes de fabrication de cette matière, appelée *ulli* en nahuatl, langue des aztèques, et ayant donné origine au nom espagnol (Mexique) *hule*, et notamment celles permettant de la réticuler ont néanmoins été perdues après l'effondrement de ces civilisations. La réticulation chimique des caoutchoucs, en particulier la réticulation au soufre, procédé connu aujourd'hui sous le nom de vulcanisation, doit beaucoup aux travaux de Charles Goodyear qui, par ailleurs, cherchait plus à mettre au point un revêtement imperméable à partir de latex naturel qu'un matériau élastique rebondissant.

La réticulation chimique se caractérise par l'établissement de liaisons chimiques covalentes entre chaînes polymères du matériau élastomère de base, par exemple le caoutchouc naturel. De cette manière, les chaînes polymères, en général assez longues, viennent à former un réseau tridimensionnel souvent représenté en deux dimensions sous l'aspect d'un filet dont les mailles sont plus ou moins resserrées, en fonction de la densité de réticulation (ou la densité de noeuds de réticulation). La densité de réticulation a une influence primordiale sur les propriétés principales du réseau chimique élastomère comme le module en traction ou en compression, la dureté, la résistance à la déchirure, les propriétés à la rupture (contrainte, allongement).

Il existe de nombreuses méthodes de réticulation chimique permanente, non thermo-réversible, de matériaux élastomères, parmi lesquelles, les plus utilisées sont celles à base de composés soufrés, utiles pour la réticulation de matériaux élastomères contenant des insaturations dans leurs chaînes principales, comme le polyisoprène naturel ou de synthèse, le polybutadiène, le polychloroprène et leurs copolymères, notamment avec du styrène, de l'acrylonitrile et des monomères acryliques. Le souffre est capable de former de ponts mono, bi ou polysulfure entre deux chaînes, par réaction avec des insaturations présentes initialement dans celles-ci. Une autre méthode très usitée est celle de la réticulation chimique aux peroxydes qui par l'intermédiaire de réactions radicalaires, provoquent des arrachements de radicaux H • dans les chaînes polymères, lesquelles se trouvent alors capables de s'unir par la recombinaison des radicaux C • ainsi crées.

Les méthodes industrielles de réticulation chimique d'élastomères font appel à des formulations plus ou moins complexes, dans lesquelles on peut trouver, par exemple, en plus des agents de réticulation principaux comme le soufre ou les peroxydes, des accélérateurs, des charges, des stabilisants thermiques et anti-rayonnement, des « short-stoppers » ou agents modérateurs...

La réticulation chimique non thermo-réversible des élastomères présente de nombreux avantages en termes de propriétés mécaniques et thermiques de ceux-ci, mais elle implique l'inconvenient, parfois majeur, de générer des matériaux thermofixes qui ne peuvent être mis en oeuvre qu'une seule fois et ceci, pendant un temps, parfois court précédant la réaction de réticulation. En effet, la réticulation chimique étant permanente, une fois que le matériau est réticulé, il ne peut plus être retravaillé ou recyclé thermomécaniquement.

Pour palier à cet inconvénient majeur, des technologies nouvelles ont été développées tout au long du XX ème siècle pour l'obtention de matériaux élastomères à réticulation non permanente. Celle-ci est également appelée réticulation réversible ou réticulation physique, clairement différente de la réticulation chimique permanente. Les matériaux élastomères à réticulation non permanente pouvant, donc, être retravaillés thermomécaniquement, notamment à travers des techniques de mise en oeuvre classiquement employées pour les polymères, comme l'extrusion, l'injection, les différentes techniques de moulage comme le rotomoulage, forment la famille des élastomères thermoplastiques. L'un des moyens les plus communs d'obtenir des matériaux élastomères thermoplastiques consiste à fabriquer des copolymères à blocs comportant de manière alternée ou multialternée, des segments souples de type élastomère non réticulé, et des segments rigides. Des exemples de copolymères à blocs pouvant servir en tant qu'élastomères thermoplastiques sont les copolymères à blocs styréniques comme les poly styrène-b-butadiène-b-styrène (SBS), ou les poly styrène-b-isoprène-b-styrène (SIS). Les blocs rigides, ici les blocs polystyrène s'associent entre eux constituant, aux températures d'utilisation (inférieures à la température de transition vitreuse ou à la température de ramolissement des blocs rigides), des nodules au sein d'une matrice souple formée par les blocs souples. Cela est obtenu en ajustant la proportion des deux types de blocs. De cette manière, le matériau se comporte comme un ensemble de chaînes souples élastomères, unies entre elles par les agrégats de blocs rigides qui font office de noeuds de réticulation. Cependant, comme les blocs rigides peuvent ramollir et éventuellement couler par élevation de la température, le matériau peut être destructuré et donc, retravaillé ou mis en oeuvre thermomécaniquement. Les noeuds de réticulation formés par les blocs rigides sont, ainsi, des noeuds non-permanentes ou noeuds physiques.

Il est également possible d'obtenir des élastomères thermoplastiques par dispersion dans une matrice thermoplastique non élastomère, d'une fraction de phase élastomère réticulé ou non. Cette stratégie composite permet d'apporter l'élasticité et le comportement caoutchoutique à une matrice thermoplastique reprocessable.

Une autre stratégie de formation de sites susceptibles de réticuler physiquement, au sein des chaînes polymères de base, est celle de la modification chimique de ces chaînes par fonctionnalisation ou par greffage. Il s'agit d'inclure, par fonctionnalisation à l'aide de monomères fonctionnels introduits pendant la polymérisation ou par greffage, de préférence greffage covalent, sur les chaînes de base, des motifs autocomplémentaires capables de s'associer entre eux par l'intermédiaire d'intéractions physiques non permanentes comme les intéractions ioniques, les liaisons hydrogène, les intéractions ions-dipôle, dipôle-dipôle.

Il est également possible d'introduire sur les chaînes élastomères de base, des motifs complémentaires différents entre eux, mais susceptibles de réagir par l'intermédiaire d'une réaction chimique thermoréversible. Dans ce cas particulier, on ne parle pas de réticulation physique, mais de réticulation chimique réversible ; en tout cas, ce type de réticulation comme la réticulation physique proprement dite, n'est pas permanente à différence de la réticulation chimique classique.

La demande de brevet US6746562 décrit différents systèmes où des chaînes élastomères de base ont été greffées soit avec des motifs capables de réagir chimiquement de manière réversible, soit avec des motifs capables d'interagir physiquement par des liaisons non-covalentes comme les liaisons hydrogène. Dans les deux cas, le résultat est celui de l'obtention de matériaux élastomères thermo-réversibles et donc, susceptibles d'être retravaillés ou remis en forme ou recyclés. La réticulation réversible purement physique ou basée sur des réactions chimiques réversibles comme décrit ci-dessus a, malgré tout, l'inconvénient important, par rapport à la réticulation chimique classique de ne pas permettre d'atteindre les performances de très haut niveau des caoutchoucs réticulés chimiquement, notamment en termes de propriétés mécaniques comme la résistance au fluage et le comportement élastique sur des plages de température suffisamment larges.

L'article « New thermoreversible and combined networks via hydrosilylation with neutral Pt(II)-complexes » de J. SCHADEBRODT et Al. décrit un matériau thermoplastique élastomère présentant un réseau tridimensionnel comportant à la fois des noeuds de réticulation chimique et des noeuds de réticulation physique, obtenu par hydrosilylation d'un polydiène en présence d'un catalyseur spécifique, puis réticulation chimique du polymère ainsi obtenu avec des oligodiméthylsiloxanes à terminaisons hydrides.

La demanderesse a maintenant trouvé qu'il est autrement possible de réticuler des chaînes polymères de faible, moyenne ou haute masse moléculaire avec aussi bien une réticulation chimique classique et, donc, permanente, et une réticulation réversible, de préférence physique et encore plus préférentiellement à base de liaisons hydrogène. Le résultat est celui de l'obtention de matériaux ayant une bonne stabilité dimensionnelle et de bonnes propriétés mécaniques grâce à la réticulation chimique permanente, tout en étant plus faciles à mettre en oeuvre et ayant des propriétés particulières, comme par exemple des propriétés mécaniques modulables, du fait de l'introduction d'un mode de réticulation différent (non permanent) et susceptible d'évoluer en fonction des paramètres de l'environnement d'utilisation, comme, par exemple, la température ou le temps caractéristique de sollicitation.

L'invention a donc pour objet un matériau élastomère comprenant des chaînes polymères souples associées entre elles d'une part par des ponts de réticulation à liaisons covalentes permanentes et d'autre part, par des ponts de réticulation à liaisons non covalentes tel que défini dans la revendication 1.

Par ponts de réticulation à liaisons covalentes permanentes, on entend au sens de la présente invention, des ponts de réticulation non thermoréversible, la réticulation chimique étant permanente, une fois que le matériau est réticulé, il ne peut plus être retravaillé ou recyclé thermomécaniquement.

Par ponts de réticulation à liaisons non covalentes, on entend au sens de la présente invention, des ponts de réticulation susceptibles de se dissocier de manière réversible en fonction de la variation des paramètres de l'environnement d'utilisation, comme la température ou le temps de sollicitation mécanique.

Par « polymère souple » on entend au sens de la présente invention, un polymère caoutchoutique présentant une température de transition vitreuse inférieure à sa température d'utilisation, autrement dit, un matériau polymère souple à la température d'utilisation. Un tel matériau présente de préférence un module de Young, mesuré à la température d'utilisation, compris entre 10 000 Pa et 100 000 000 Pa, et, de préférence, compris entre 50 000 Pa et 10 000 000 Pa.

L'invention a également pour objet un procédé d'obtention d'un matériau conforme à l'invention

A titre de préambule, on notera que l'expression "compris entre" doit être interprétée, dans la présente description, comme incluant les bornes citées.

Les matériaux conformes à l'invention peuvent être obtenus en pontant des chaînes de polymères souples selon des mécanismes de réticulation chimique permanente ou non thermo-réversibles et des mécanismes de réticulation réversible. La suite de la description décrit plus en détail les polymères souples utilisables selon l'invention, la réticulation chimique de ces derniers pour former des ponts de réticulation chimique permanente, ainsi que la fonctionnalisation ou greffage du polymère pour former des ponts de réticulation réversibles.

### Polymères souples

Parmi les polymères de base souples, utiles pour la préparation des matériaux de l'invention, nous pouvons citer comme exemples non exclusifs, le polybutadiène, le poly isoprène, le poly chloroprène et leurs versions hydrogénées, le polyisobutylène, les copolymères à blocs du polybutadiène et de l'isoprène avec le styrène, ainsi que leurs versions hydrogénées comme le poly styrène-b-butadiène (SB), le poly styrène-b-butadiène-b-styrène (SBS), le poly styrène-b-isoprène-b-styrène (SIS), les poly styrène-b-(isoprène-stat-butadiène)-b-styrène ou poly styrène-b-isoprène-b-butadiène-b-styrène (SIBS), le SBS hydrogéné (SEBS), le poly styrène-b-butadiène-b-méthyl méthacrylate (SBM), ainsi que sa version hydrogénée (SEBM), le poly méthylméthacrylate-b-acrylate de butyle-b-méthyl méthacrylate (MAM), le poly styrène-b-acrylate de butyle-b-styrène (SAS), les copolymères statistiques du butadiène avec le styrène (SBR) et l'acrylonitrile (NBR) et leurs versions hydrogénées, les caoutchoucs butyle ou halogénés, les polyéthylènes, les polypropylènes, les copolymères éthylène-alcool vinylique, les copolymères d'éthylène-propylène et d'éthylène-propylène-diène (EPDM), les copolymères de l'éthylène avec des monomères acryliques et vinyliques comme les copolymères d'éthylène et acétate de vinyle, les copolymères d'éthylène, acétate de vinyle, et anhydride maléique, disponibles auprès de la société ARKEMA sous la dénomination commerciale OREVAC®, les copolymères d'éthylène, ester acrylique, les copolymères d'éthylène, ester acrylique, anhydride maléique, les copolymères d'éthylène, ester acrylique, ester acrylique fonctionnel comme l'acrylate ou méthacrylate de glycidyle, disponibles auprès de la société ARKEMA sous la dénomination commerciale LOTADER®, des polymères ou copolymères acryliques souples comme les résines à base d'esters méthacryliques telles que le polyacrylate de butyle et ses copolymères avec le styrène, ou d'autres monomères acryliques ou vinyliques, ainsi que leurs mélanges.

A titre préférentiel, on utilise à titre de polymère souple un ou plusieurs élastomères choisis dans la liste ci-dessous qui conviennent avantageusement à la fabrication d'objets en caoutchouc.

Ainsi, de manière préférée, le polymère souple selon l'invention peut comprendre un ou plusieurs élastomères diéniques. Par élastomères diéniques, on entend plus précisément :
(1) les homopolymères obtenus par polymérisation d'un monomère diène conjugué ayant de 4 à 22 atomes de carbone, comme par exemple : le butadiène-1,3, le méthyl-2 butadiène-1,3, le diméthyl-2,3 butadiène-1,3, le diéthyl-2,3 butadiène-1,3, le méthyl-2 éthyl-3 butadiène-1,3, le chloro-2 butadiène-1,3, le méthyl-2 isopropyl-3 butadiène-1,3, le phényl-1 butadiène-1,3, le pentadiène-1,3, l'hexadiène-2,4 ;
(2) les copolymères obtenus par copolymérisation d'au moins deux des diènes conjugués précités entre eux ou par copolymérisation d'un ou plusieurs des diènes conjugués précités avec un ou plusieurs monomères insaturés éthyléniquement choisis parmi :
   les monomères vinyles aromatiques ayant de 8 à 20 atomes de carbone, comme par exemple : le styrène, l'ortho-, méta- ou paraméthylstyrène, le mélange commercial « vinyl-toluène », le paratertiobutylstyrène, les méthoxystyrènes, les chlorostyrènes, le vinylmésitylène, le divinylbenzène, le vinylnaphtalène ;
   les monomères nitriles vinyliques ayant de 3 à 12 atomes de carbone, comme par exemple l'acrylonitrile, le méthacrylonitrile ;
   les monomères esters acryliques dérivés de l'acide acrylique ou de l'acide méthacrylique avec des alcanols ayant de 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle, le méthacrylate d'isobutyle ;
   les copolymères peuvent contenir entre 99 % et 20 % en poids d'unités diéniques et entre 1 % et 80 % en poids d'unités vinyles aromatiques, nitriles vinyliques et/ou esters acryliques ;
(3) les copolymères ternaires obtenus par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène (élastomère EPDM) ;
(4) le caoutchouc naturel ;
(5) les copolymères obtenus par copolymérisation d'isobutène et d'isoprène (caoutchouc butyle), ainsi que les versions halogénées, en particulier chlorées ou bromées, de ces copolymères ;
(6) un mélange de plusieurs des élastomères précités (1) à (5) entre eux.

Les polymères utilisables selon l'invention peuvent être obtenus selon des techniques classiques de polymérisation bien connues de l'homme du métier.

### Modification du polymère par réticulation chimique

La réticulation chimique permanente s'effectue par des moyens classiques tels que la vulcanisation au soufre, la réticulation avec des peroxydes ou la réticulation avec des agents de réticulation au moins bifonctionnels capables de réagir chimiquement avec des sites réactifs présents dans au moins deux chaînes polymères. Toutes les combinaisons chimiques possibles entre sites réactifs sur chaînes polymères et agents de réticulation au moins bifonctionnels, sont utiles dès lors qu'elles permettent l'établissement de ponts de réticulation chimique, liaisons covalentes permanentes entre chaînes de polymères. Ainsi, par exemple, pour un polymère de base comportant des sites réactifs de type acide carboxylique, un agent réticulant approprié peut être toute molécule au moins difonctionnelle susceptible de réagir chimiquement avec ces sites réactifs, comme par exemple, une diamine, un diol, un diepoxy, un diisocyanate, et leurs combinaisons respectives comme par exemple une alcanol amine. Dans un autre exemple, pour un polymère de base comportant des sites réactifs de type époxy (ou glycidyle), les agents réticulants, au moins bifonctionnels vis-à-vis des époxys peuvent être, par exemple, les amines primaires, les diamines, les diols, les diacides carboxyliques.

### Modification du polymère par greffage ou par fonctionnalisation pour y inclure des motifs associatifs réversibles

La réticulation réversible rendue possible par la présence dans le matériau objet de l'invention, de ponts de réticulation à liaisons non covalentes nécessite l'introduction ou l'inclusion de groupes associatifs sur des chaînes de polymère souple.

Selon un mode préféré de l'invention les associations réversibles établies sont des associations physiques et selon un mode encore plus préféré de l'invention, les associations physiques sont des liaisons hydrogène.

De préférence, les polymères mis en oeuvre dans le matériau objet de l'invention sont modifiés de façon à ce que ces polymères portent des groupes associatifs à base d'hétérocycle azoté.

Pour ce faire, un agent de modification peut être mis à réagir avec le polymère à modifier. Plus précisément, la modification du polymère peut être effectuée par greffage, c'est-à-dire par la réaction dudit polymère avec un agent de modification portant, d'une part, un groupe associatif à base d'hétérocycle azoté et, d'autre part, un groupe réactif, choisi par exemple parmi les groupes amine, mercaptan, époxy, isocyanate, anhydride, alcool, acide, de préférence amine, ledit groupe réactif formant une liaison covalente avec une fonction réactive, telle qu'une fonction acide, anhydride, alcool, mercaptan, amine, époxy ou isocyanate, de préférence anhydride ou époxy, portée par ledit polymère.

Par "groupes associatifs", on entend des groupes susceptibles de s'associer les uns aux autres par des liaisons hydrogène, ioniques et/ou hydrophobes. Il s'agit selon un mode préféré de l'invention de groupes susceptibles de s'associer par des liaisons hydrogènes, comprenant un hétérocycle azoté, de préférence diazoté, généralement à 5 ou 6 chaînons. Des exemples de groupes associatifs utilisables selon ce mode préféré de l'invention sont les groupes imidazolidinyle, triazolyle, triazinyle, bis-uréyle, uréido-pyrimidyle. Le groupe imidazolidinyle est préféré.

Une autre manière de modifier les polymères mis en oeuvre dans le matériau objet de l'invention de façon à ce que ces polymères portent des groupes associatifs à base d'hétérocycle azoté, est la fonctionnalisation du polymère pendant sa polymérisation, à l'aide de monomères fonctionnels susceptibles de copolymériser et, donc, de s'insérer, ainsi, dans le squelette même des chaînes polymère tout en portant lesdits groupes associatifs à base d'hétérocycle azoté. On peut citer à titre d'exemples de monomères permettant l'introduction de groupes imidazolidinyle dans le polymère, le méthacrylate d'éthylimidazolidone et le méthacrylamide d'éthylimidazolidone.

L'agent de modification peut ainsi répondre à l'une quelconque des formules (B1) à (B4) : 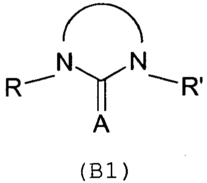 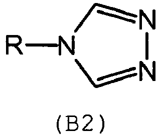 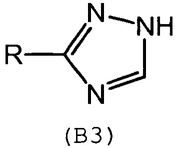 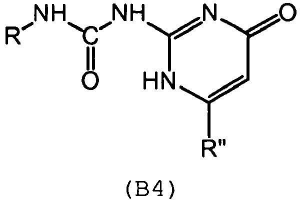 où :
R désigne un motif contenant au moins un groupe réactif,y compris un groupe polymérisable (cas d'introduction par copolymérisation avec des monomères fonctionnels porteurs des groupes associatifs).
R' désigne un atome d'hydrogène,
R" désigne un atome d'hydrogène ou un groupe quelconque,
A désigne un atome d'oxygène ou de soufre ou un groupement -NH, de préférence un atome d'oxygène.

Des exemples préférés d'agents de modification sont la 2-aminoéthylimidazolidone (UDETA), la 1-(2-[(2-aminoéthyl)amino]éthyl)imidazolidone (UTETA), la 1-(2-{2-[(2-aminoéthylamino]éthyl}amino)éthyl]imidazolidone (UTEPA), la N-(6-aminohexyl)-N'-(6-méthyl-4-oxo-1,4-dihydropyrimidin-2-yl)urée (UPy), le 3-amino-1,2,4-triazole (3-ATA) et le 4-amino-1,2,4-triazole (4-ATA). L'UDETA est préférée pour une utilisation dans la présente invention.

Certains de ces composés peuvent être obtenus par réaction de l'urée avec une polyamine. Par exemple, l'UDETA, l'UTETA et l'UTEPA peuvent respectivement être préparées en faisant réagir de l'urée sur la diéthylène triamine (DETA), la triéthylène tétramine (TETA) et la tétraéthylène pentamine (TEPA).

Lorsque l'introduction de groupes associatifs se fait par greffage, le procédé de greffage est réalisé en faisant réagir l'agent de modification et le polymère porteur de fonctions réactives.

Cette étape peut être réalisée à l'état fondu, par exemple dans une extrudeuse ou un mélangeur interne à une température qui peut aller de 50°C à 300°C et, de préférence de 200 à 280°C. L'agent de modification est mélangé au polymère seul, ou à l'aide d'un additif permettant l'imprégnation des grains de polymère solide par l'agent de modification préalablement fondu. Le mélange solide avant introduction dans l'extrudeuse ou le mélangeur peut être rendu plus homogène par réfrigération pour faire solidifier l'agent de modification. Il est également possible de doser ce dernier dans l'extrudeuse ou le mélangeur après un début de fusion du polymère à greffer. Le temps à la température de greffage peut aller de 30 secondes à 5 heures. L'agent de modification peut être introduit dans l'extrudeuse sous forme de mélange-maître dans un polymère qui, de préférence, peut être le polymère à greffer. Selon ce mode d'introduction, le mélange maître peut comporter jusqu'à 30% en poids de l'agent de modification ; ensuite, le mélange maître est « dilué » dans le polymère à greffer lors de l'opération de greffage.

Selon une autre possibilité, le greffage peut être effectué par réaction en phase solvant, par exemple dans le chloroforme anhydre. Dans ce cas d'exemple (chloroforme anhydre), la température de réaction peut aller de 5°C à 75°C, pendant une durée allant de quelques minutes à un jour et à des concentrations en polymère avant greffage comprises entre 1 et 50% en poids, par rapport au poids total de la solution.

Le nombre de groupes associatifs introduits sur le polymère doit être suffisant pour obtenir des matériaux ayant une bonne stabilité dimensionnelle et de bonnes propriétés mécaniques grâce à la réticulation chimique permanente, tout en étant plus faciles à mettre en oeuvre et ayant des propriétés particulières, comme par exemple des propriétés mécaniques modulables, du fait de l'introduction d'un mode de réticulation différent (non permanent) et susceptible d'évoluer en fonction des paramètres de l'environnement d'utilisation, comme, par exemple, la température ou le temps caractéristique de sollicitation.

Ce nombre peut être simplement ajusté en faisant varier la quantité d'agent de modification ou en ajustant le temps et la température de réaction. On préfère en général que la quantité d'agent de modification représente de 0,1 à 20% en poids, plus préférentiellement de 0,5 à 10% en poids, par rapport au poids du polymère non modifié et/ou que le nombre moyen de groupes associatifs par chaîne de polymère soit compris entre 1 et 200.

Ainsi, de préférence, le taux de modification du polymère par des greffons ou des comonomères portant les groupes associatifs est de 0,1 à 20% en poids d'agent de modification par rapport au polymère

Dans un mode de réalisation préféré, le nombre moyen de groupes associatifs par chaîne polymère après modification se trouve compris entre 1 et 200.

Ainsi, le rapport entre le pourcentage de ponts de réticulation à liaisons covalentes permanentes et le pourcentage de ponts de réticulation à liaisons non covalentes est compris entre 99/1 et 1/99, et de préférence compris entre 90/10 et 20/80.

Dans le cas où la fonction réactive portée par le polymère à modifier par greffage est une fonction anhydride, celle-ci peut être créée sur ledit polymère, par cyclisation de fonctions acides. Ce procédé de cyclisation peut avantageusement être conduit dans des conditions de catalyse basique. Parmi les catalyseurs basiques préférés, on compte la soude et le méthoxyde de sodium, CH₃0Na. La cyclisation peut s'effectuer par passage du polymère porteur de groupes acides dans une extrudeuse à vis simple ou double, en présence d'un catalyseur et éventuellement d'autres additifs, tels que des lubrifiants, des antioxydants, des colorants, et/ou des correcteurs optiques pour donner du brillant et réduire le jaunissement. La température d'extrusion peut être comprise entre 200 et 300° C et de préférence entre 250 et 280°C. Un ou plusieurs passages en extrusion peuvent être effectués pour obtenir le niveau de cyclisation (par exemple, formation d'anhydride glutarique) souhaité. Selon une autre possibilité, la réaction de cyclisation peut être effectuée sous vide poussé. Le taux de cyclisation peut être contrôlé pour ajuster le taux de fonctions anhydride obtenues, qui peut par exemple aller de 0,1 à 20% en moles.

Lorsque l'introduction dans le polymère de base, des groupes associatifs susceptibles de créer *in fine* la réticulation physique, se fait par greffage, ce greffage peut avoir lieu avant, pendant ou après la réticulation chimique permanente décrite ci-dessus.

Lorsque cette introduction de groupes associatifs se fait par la fonctionnalisation pendant la polymérisation des chaînes de polymère souple à modifier la réticulation chimique classique, peut se faire pendant ou après la polymérisation.

Selon une autre variante de l'invention, les groupes réactifs de l'agent de modification, c'est-à-dire les molécules utilisées pour introduire des groupes associatifs capables de créer des liaisons physiques inter-chaînes, sont aussi capables de provoquer une réticulation chimique permanente.

Ces groupes réactifs peuvent être : amine, mercaptan, époxy, isocyanate, anhydride, alcool, acide, de préférence amine.

Selon une autre variante de l'invention, l'agent de modification est aussi capable de provoquer une réticulation chimique permanente.

Ainsi, dans un mode de réalisation particulier de l'invention, les ponts de réticulation permanente à liaison covalente et les ponts de réticulation à liaisons non covalentes sont formés grâce à l'agent de modification.

A titre d'exemple, on peut citer comme agent de modification l'UDETA, qui est capable de provoquer une réticulation chimique permanente à la fois par le groupe réactif amine primaire, et par l'amine secondaire portée par l'hétérocycle constituant le groupe associatif.

L'invention a donc aussi pour objet un procédé de préparation d'un matériau réticulé à base de polymère souple comprenant les étapes suivantes :
(a) la réticulation chimique permanente dudit polymère,
(b) la réticulation physique dudit polymère (i) par greffage de groupes associatifs à base d'hétérocycle azoté ou (ii) par fonctionnalisation lors de la polymérisation dudit polymère avec des comonomères portant des groupes associatifs à base d'hétérocycle azoté, tel que défini dans la revendication 4.

Les étapes a) et b)(i) peuvent avoir lieu dans un ordre quelconque ou être simultanées.

### Additifs

Le matériau selon l'invention peut être utilisé en tant que tel ou dans des mélanges monophasiques ou polyphasiques avec un ou plusieurs composés tels que les coupes pétrolières, les solvants, les charges minérales et organiques, les plastifiants, les résines tackifiantes, les « aides de process » ou aides à la mise en oeuvre, les lubrifiants, les anti-oxydants, les additifs anti-radiation, (anti-UV), les pigments et/ou les colorants.

En particulier, des additifs susceptibles d'être ajoutés au matériau selon l'invention sont notamment :
- les lubrifiants, tels que l'acide stéarique et ses esters, les esters cireux (, les cires de polyéthylène, la paraffine ou les lubrifiants acryliques
- les colorants
- les pigments minéraux ou organiques, tels que ceux décrits dans le document " Plastics Additives and Modifiers Handbook, Section VIII, Colorants ", J. Edenbaum, Ed., Van Nostrand, pages 884-954. A titre d'exemples de pigments utilisables, on peut citer le noir de carbone, le dioxyde de titane, l'argile, les particules métalliques ou les particules de mica traité de la marque IRIODIN® commercialisées par MERCK,

- les plastifiants
- les stabilisants thermiques et/ou UV, tels que les stéarates d'étain, de plomb, de zinc, de cadmium, de baryum ou de sodium, dont le Thermolite^{®} d'ARKEMA,
- les co-stabilisants tels que les huiles naturelles époxydées,
- les anti-oxydants, par exemple phénoliques, soufrés ou phosphitiques,
- les charges ou renforts, notamment des charges cellulosiques, du talc, du carbonate de calcium, du mica ou de la wollastonite, du verre ou des oxydes ou hydrates métalliques,
- les agents antistatiques,
- les fongicides et biocides,
- les agents gonflants servant à la fabrication de pièces expansées, tels que les azodicarbonamides, l'azo bis isobutyronitrile, le diéthyl azo-bis isobutyrate,
- les agents ignifugeants, dont le trioxyde d'antimoine, le borate de zinc et les phosphate esters bromés ou chlorés,
- les solvants, et
- leurs mélanges.

Le matériau objet de l'invention peut être utilisé pour la fabrication de divers articles, notamment par calandrage, extrusion, extrusion-soufflage, moulage classique, par injection, rotomoulage, thermoformage, etc.

Il peut ainsi servir à fabriquer tout objet en caoutchouc tels que des joints d'étanchéité, des isolants thermiques ou acoustiques, des pneumatiques, des câbles, des gaines, des semelles de chaussures, des emballages, des revêtements (peintures, films, produits cosmétiques), des patchs (cosmétiques ou dermopharmaceutiques), ou autres systèmes de piégeage et relargage d'actifs, des pansements, des colliers de serrage élastiques, des tubes à vide, des tubes et flexibles de transport de fluides, et, d'une manière générale, des pièces devant présenter un comportement élastique, tout en ayant une bonne souplesse, une bonne résistance à la fatigue, aux chocs et à la déchirure. Ces matériaux peuvent également faire partie de compositions adhésives ou cosmétiques, des formulations d'encres, de vernis ou de peintures.

L'invention sera mieux comprise à la lumière des exemples suivants, donnés à des fins d'illustration seulement et qui n'ont pas pour but de limiter la portée de l'invention, qui est définie par les revendications annexées.

### Exemples :

Dans les exemples ci-dessous, le polymère souple de base à réticuler chimiquement et physiquement est un copolymère d'éthylène, acrylate de méthyle et glycidyl méthacrylate, commercialisé par ARKEMA sous le nom de LOTADER® AX 8900. Ce polymère de base est formulé à l'aide de charges : noir de carbone et carbonate de calcium, d'un plastifiant qui rend le polymère d'avantage souple à température ambiante, d'un lubrifiant et d'une aide de « process ». La formulation type du matériau de base et la fonction des ingrédients sont données dans le Tableau I.

**TABLEAU I**

| Produit | Fonction | Parts par cent parts polymère |
|---|---|---|
| Lotader® AX8900 | Polymère de base | (100 parts) |
| Noir de carbone N 772 | Charge | 30 |
| Carbonate de calcium | Charge | 30 |
| Nycoflex® ADB 30 | Plastifiant | 10 |
| Acide stéarique | Lubrifiant/ Anti-collant | 1,5 |
| Ofalub® SEO | Aide de « process » | 1 |

Ces produits sont mélangés dans un mélangeur interne de type Brabender® ou Haake®, à une température supérieure à la température de fusion du polymère époxydé (60°C). jusqu'à ce que le mélange devienne homogène. Le mélange ainsi obtenu est ensuite mélangé avec des quantités différentes de l'agent modifiant porteur de groupes associatifs, la 2-aminoéthylimidazolidone (UDETA), et repassé dans le mélangeur, jusqu'à l'obtention d'un mélange homogène. Le Tableau II montre les compositions des mélanges à teneur différente en UDETA.

**TABLEAU II**

| Produit | Mélange 1 (parts par 100 parts polymère) | Mélange 2 (parts par 100 parts polymère) | Mélange 3 (parts par 100 parts polymère) | Mélange 4 (parts par 100 parts polymère) |
|---|---|---|---|---|
| Lotader® AX 8900 | (100) | (100) | (100) | (100) |
| N 772 | 30 | 30 | 30 | 30 |
| CaCO3 | 30 | 30 | 30 | 30 |
| Nycoflex® ADB 30 | 10 | 10 | 10 | 10 |
| Acide stéarique | 1,5 | 1,5 | 1,5 | 1,5 |
| Ofalub® SEO | 1 | 1 | 1 | 1 |
| UDETA | 8,47 | 4, 18 | 6,27 | 10 |

L'évolution des propriétés rhéologiques du fait de l'ajout de l'UDETA peut être suivie dans un rhéomètre permettant de mesurer, sur une pastille du matériau, le couple en torsion, à différentes températures ou différents temps. Les essais peuvent également être effectués en mode dynamique avec la fréquence comme paramètre. L'ajout d'UDETA à cette formulation provoque, en fonction de la température ou du temps à une température donnée, une augmentation du couple, qui peut être associée au greffage de l'UDETA sur les chaînes polymères, mais aussi, à une réticulation chimique de celles-ci provoquée également par l'UDETA. Dans le Tableau II, le mélange 1 est stoechiométrique entre amines de l'UDETA et motifs époxy du polymère. Les mélanges 2 à 4 correspondent à des stoechiométries de 0,5, 0,75 et 1,2 exprimées en ratio molaire UDETA/époxy respectivement. La réaction de greffage de l'amine primaire d'UDETA sur les motifs époxy est rapide et se produit à des températures modérées (typiquement inférieures à 100°C). Pour obtenir la réticulation chimique à l'aide de l'UDETA, l'amine secondaire résultante d'une première réaction époxy-UDETA, doit réagir, à nouveau, avec un groupe époxy d'une autre chaîne polymère. Une autre possibilité est que ce soit l'hydrogène du cycle imidazolidone qui intervienne, après la première réaction époxy-UDETA, dans une deuxième étape de réaction avec un époxy d'une autre chaîne. Dans tous les cas, la deuxième réaction est moins rapide et se produit à une température plus élevée. Pour contrôler le degré de réticulation chimique par rapport à la fonctionnalisation (simple greffage d'UDETA) qui emmene la possibilité d'établir des liaisons hydrogène (physiques), on joue sur la stoechiométrie aussi bien que sur la température de recuit du mélange. Le tableau III montre l'évolution du couple dans le rhéomètre, en fonction de la température, pour les différents mélanges.

**TABLEAU III**

| Produit | Mélange 1 Couple (dN m) | Mélange 2 Couple (dN m) | Mélange 3 Couple (dN m) | Mélange 4 Couple (dN m) |
|---|---|---|---|---|
| 40°C | 29 | 27 | 27 | 30 |
| 50°C | 16 | 20 | 16 | 15 |
| 75°C | 17 | 21 | 18 | 15 |
| 100°C | 19 | 24 | 22 | 16 |
| 150°C | 25 | 32 | 30 | 19 |
| 200°C | 28 | 36 | 35 | 20 |
| 220°C | 23 | 35 | 32 | 15 |

Ce tableau montre que les mélanges dont la stoechiométrie est en défaut d'UDETA (0,5 et 0,75) conduisent aux couples les plus élevés, alors que les mélanges à équivalence UDETA/époxy et en excès d'UDETA présentent des couples plus faibles. En effet les mélanges à 0,5 et 0,75 UDETA/époxy sont plus susceptibles de réticuler chimiquement, les groupements époxy étant en excès et pouvant réagir plus facilement une deuxième fois avec l'UDETA. Les mélanges aux ratios 1 et 1,2 seront essentiellement réticulés physiquement, les groupes époxy ayant été consommés par la première réaction de greffage d'UDETA. Il est également intéressant de signaler que les mélanges à réticulation physique très majoritaire (mélanges 1 et 4) présentent une chute marquée du couple à haute température (> 200°C) qui est révélatrice de la dissociation avancée des liaisons physiques à cette température, alors que les mélanges présentant une bonne proportion de réticulation chimique ont tendance à garder un couple pratiquement constant ou en diminution plus légère. Ces exemples montrent bien l'intérêt de combiner la réticulation chimique permanente et la réticulation physique pour obtenir des matériaux avec des propriétés variées et à façon selon les applications.

## Revendications

1. Matériau élastomère comprenant des chaînes polymères souples associées entre elles d'une part par des ponts de réticulation permanente à liaisons covalentes et d'autre part par des ponts de réticulation à liaisons non covalentes, les ponts réticulants à liaison non covalentes comprenant des groupes associatifs à base d'hétérocycle azoté, lesdits hétérocycles azotés étant des groupes imidazolidinyle.

2. Matériau selon la revendication 1, **caractérisé en ce que** ledit polymère est choisi parmi le polybutadiène, le poly isoprène, le poly chloroprène, le polyisobutylène, les copolymères à blocs du polybutadiène et de l'isoprène avec le styrène, le poly styrène-b-butadiène (SB), le poly styrène-b-butadiène-b-styrène (SBS), le poly styrène-b-isoprène-b-styrène (SIS), les poly styrène-b-(isoprène-stat-butadiène)-b-styrène ou poly styrène-b-isoprène-b-butadiène-b-styrène (SIBS), le SBS hydrogéné (SEBS), le poly styrène-b-butadiène-b-méthyl méthacrylate (SBM), ainsi que sa version hydrogénée (SEBM), le poly méthylméthacrylate-b-acrylate de butyle-b-méthyl méthacrylate (MAM), le poly styrène-b-acrylate de butyle-b-styrène (SAS), les copolymères statistiques du butadiène avec le styrène (SBR) et l'acrylonitrile (NBR) et leurs versions hydrogénées, les caoutchoucs butyle ou halogénés, les polyéthylènes, les polypropylènes, les copolymères éthylène-alcool vinylique, les copolymères d'éthylène-propylène et d'éthylène-propylène-diène (EPDM), les copolymères de l'éthylène avec des monomères acryliques et vinyliques comme les copolymères d'éthylène et acétate de vinyle, les copolymères d'éthylène, acétate de vinyle, et anhydride maléique, les copolymères d'éthylène, ester acrylique, les copolymères d'éthylène, ester acrylique, anhydride maléique, les copolymères d'éthylène, ester acrylique, ester acrylique fonctionnel comme l'acrylate ou méthacrylate de glycidyle, des polymères ou copolymères acryliques souples comme les résines à base d'esters méthacryliques telles que le polyacrylate de butyle et ses copolymères avec le styrène, ou d'autres monomères acryliques ou vinyliques, les élastomères diéniques ainsi que leurs mélanges.

3. Matériau selon la revendication 1 ou 2, **caractérisé en ce que** le rapport entre le pourcentage de ponts de réticulation à liaisons covalentes et le pourcentage de ponts de réticulation à liaisons non covalentes est compris entre 99/1 et 1/99, et de préférence compris entre 90/10 et 20/80.

4. Procédé de préparation d'un matériau thermoplastique réticulé à base de polymère souple comprenant les étapes suivantes :
(a) la réticulation chimique permanente dudit polymère,
(b) la réticulation physique dudit polymère (i) par greffage de groupes associatifs à base d'hétérocycle azoté ou (ii) par fonctionnalisation lors de la polymérisation dudit polymère avec des comonomères portant des groupes associatifs à base d'hétérocycle azoté, ledit hétérocycle azoté étant un groupe imidazolidinyle.

5. Procédé selon la revendication 4, **caractérisé en ce que** l'étape b) est effectuée par réaction dudit polymère avec un agent de modification portant, d'une part, un groupe associatif à base d'hétérocycle azoté et, d'autre part, un groupe réactif, choisi par exemple parmi les groupes amine, mercaptan, époxy, isocyanate, anhydride, alcool, acide, de préférence amine, ledit groupe réactif formant une liaison covalente avec une fonction réactive, telle qu'une fonction acide, anhydride, alcool, mercaptan, amine, époxy ou isocyanate, de préférence anhydride, portée par ledit polymère.

6. Procédé selon l'une quelconque des revendications 4 ou 5, **caractérisé en ce que** le taux de modification du polymère par des greffons ou des comonomères portant les groupes associatifs est de 0,1 à 20% en poids d'agent de modification par rapport au polymère.

7. Procédé selon l'une quelconque des revendications 4 à 6, **caractérisé en ce que** les étapes a) et b) (i) peuvent avoir lieu dans un ordre quelconque ou être simultanées.

8. Utilisation d'un matériau selon l'une quelconque des revendications 1 à 3 pour la fabrication d'articles choisis parmi des joints d'étanchéité, des isolants thermiques ou acoustiques, des pneumatiques, des câbles, des gaines, des semelles de chaussures, des emballages, des revêtements, des patchs, des systèmes de piégeage et relargage d'actifs, des pansements, des colliers de serrage élastiques, des tubes à vide, des tubes et flexibles de transport de fluides, des compositions adhésives ou cosmétiques, et des formulations d'encres, de vernis ou de peintures.

## Patentansprüche

1. Elastomermaterial, umfassend flexible Polymerketten, die einerseits über permanente Vernetzungsbrücken mit kovalenten Bindungen und andererseits über Vernetzungsbrücken mit nichtkovalenten Bindungen miteinander assoziiert sind, wobei die Vernetzungsbrücken mit nichtkovalenten Bindungen assoziative Gruppen auf Stickstoffheterocyclus-Basis umfassen, wobei es sich bei den Stickstoffheterocyclen um Imidazolidinylgruppen handelt.

2. Material nach Anspruch 1, **dadurch gekennzeichnet, dass** das Polymer aus Polybutadien, Polyisopren, Polychloropren, Polyisobutylen, Blockcopolymeren von Polybutadien und von Isopren mit Styrol, Poly(styrol-b-butadien) (SB), Poly(styrol-b-butadien-b-styrol) (SBS), Poly(styrol-b-isopren-b-styrol) (SIS), Poly(styrol-b-(isopren-statbutadien)-b-styrol) oder Poly(styrol-b-isopren-b-butadien-b-styrol) (SIBS), hydriertem SBS (SEBS), Poly(styrol-b-butadien-b-methylmethacrylat) (SBM) und dessen hydrierter Version (SEBM), Poly(methylmethacrylat-b-butylacrylat-b-methylmethacrylat) (MAM), Poly(styrol-b-butylacrylat-b-styrol) (SAS), statistischen Copolymeren von Butadien mit Styrol (SBR) und Acrylonitril (NBR) und deren hydrierten Versionen, Butylkautschuken oder halogenierten Kautschuken, Polyethylenen, Polypropylenen, Ethylen/Vinylalkohol-Copolymeren, Ethylen/Propylen- und Ethylen/Propylen/Dien-Copolymeren (EPDM), Copolymeren von Ethylen mit Acryl- und Vinylmonomeren wie Copolymeren von Ethylen und Vinylacetat, Copolymeren von Ethylen, Vinylacetat und Maleinsäureanhydrid, Copolymeren von Ethylen und Acrylsäureester, Copolymeren von Ethylen, Acrylsäureester und Maleinsäureanhydrid, Copolymeren von Ethylen, Acrylsäureester und funktionellem Acrylsäureester wie Glycidylacrylat oder -metacrylat, flexiblen Acrylpolymeren oder - copolymeren, wie Harzen auf Basis von Methacrylsäureestern wie Polybutylacrylat und dessen Copolymeren mit Styrol oder anderen Acryl-oder Vinylmonomeren, Dienelastomeren sowie Mischungen davon ausgewählt ist.

3. Material nach Anspruch 1 oder 2, **dadurch gekennzeichnet, dass** das Verhältnis zwischen dem Prozentanteil von Vernetzungsbrücken mit kovalenten Bindungen und dem Prozentanteil von Vernetzungsbrücken mit nichtkovalenten Bindungen zwischen 99/1 und 1/99 und vorzugsweise zwischen 90/10 und 20/80 liegt.

4. Verfahren zur Herstellung eines vernetzten thermoplastischen Material auf Basis eines flexiblen Polymers, das folgende Schritte umfasst:
(a) die permanente chemische Vernetzung des Polymers,
(b) die physikalische Vernetzung des Polymers (i) durch Aufpropfen von assoziativen Gruppen auf Stickstoffheterocyclus-Basis oder (ii) durch Funktionalisierung des Polymers mit Comonomeren mit assoziativen Gruppen auf Stickstoffheterocyclus-Basis während der Polymerisation, wobei es sich bei dem Strickstoffheterocyclus um eine Imidazolidinylgruppe handelt.

5. Verfahren nach Anspruch 4, **dadurch gekennzeichnet, dass** man Schritt b) durch Umsetzung des Polymers mit einem Modifizierungsmittel, das einerseits eine assoziative Gruppe auf Stickstoffheterocyclus-Basis und andererseits eine reaktive Gruppe, beispielsweise ausgewählt aus Amin-, Mercaptan-, Epoxid-, Isocyanat-, Anhydrid-, Alkohol- oder Säuregruppen, vorzugsweise eine Amingruppe, trägt, durchführt, wobei die reaktive Gruppe mit einer reaktiven Funktion, wie einer Säure-, Anhydrid-, Alkohol-, Mercaptan-, Amin-, Epoxid- oder Isocyanatfunktion, vorzugsweise einer Anhydridfunktion, des Polymers eine kovalente Bindung bildet.

6. Verfahren nach Anspruch 4 oder 5, **dadurch gekennzeichnet, dass** der Modifizierungsgrad des Polymers durch Pfropfanteile oder Comonomere mit den assoziativen Gruppen 0,1 bis 20 Gew.-% Modifizierungsmittel, bezogen auf das Polymer, beträgt.

7. Verfahren nach einem der Ansprüche 4 bis 6, **dadurch gekennzeichnet, dass** die Schritte a) und b) (i) in beliebiger Reihenfolge oder gleichzeitig stattfinden können.

8. Verwendung eines Materials nach einem der Ansprüche 1 bis 3 zur Herstellung von Artikeln, ausgewählt aus Dichtungen, Wärme- oder Schallisoliermitteln, Reifen, Kabeln, Hülsen, Schuhsohlen, Verpackungen, Überzügen, Pflastern, systemen zum Festsetzen und Freisetzen von Wirkstoffen, Verbänden, elastischen Klemmschellen, Vakuumrohren, Rohren und Schläuchen zum Transport von Fluiden, Klebstoffzusammensetzungen, kosmetischen Zusammensetzungen und Tinten-, Lack- oder Anstrichmittelformulierungen.

## Claims

1. Elastomer material comprising flexible polymer chains associated with one another, on the one hand, via permanent crosslinking bridges having covalent bonds and, on the other hand, via crosslinking bridges having noncovalent bonds, the crosslinking bridges having noncovalent bonds comprising associative groups based on a nitrogenous heterocycle, said nitrogenous heterocycles being imidazolidinyl groups.

2. Material according to Claim 1, **characterized in that** said polymer is chosen from polybutadiene, polyisoprene, polychloroprene, polyisobutylene, block copolymers of butadiene and of isoprene with styrene, poly(styrene-b-butadiene) (SBS), poly(styrene-b-butadiene-b-styrene) (SBS), pol(styrene-b-isoprene-b-styrene) (SIS), poly(styrene-b-(isoprene-statbutadiene)-b-styrene) or poly(styrene-b-isoprene-b-butadiene-b-styrene) (SIBS), hydrogenated SBS (SEBS), poly(styrene-b-butadiene-b-methyl methacrylate) (SBM) and its hydrogenated version (SEBM), poly(methyl methacrylate-b-butyl acrylate-b-methyl methacrylate) (MAM), poly(styrene-b-butyl acrylate-b-styrene) (SAS), random copolymers of butadiene with styrene (SBR) and acrylonitrile (NBR) and their hydrogenated versions, butyl or halogenated rubbers, polyethylenes, polypropylenes, ethyl/vinyl alcohol copolymers, ethylene/propylene and ethylene/propylene/diene (EPDM) copolymers, copolymers of ethylene with acrylic and vinyl monomers, such as copolymers of ethylene and vinyl acetate, copolymers of ethylene, vinyl acetate and maleic anhydride, copolymers of ethylene and acrylic ester, copolymers of ethylene, acrylic ester and maleic anhydride, copolymers of ethylene, acrylic ester and functional acrylic ester, such as glycidyl acrylate or methacrylate, flexible acrylic polymers or copolymers, such as resins based on methacrylic esters, such as polybutyl acrylate and its copolymers with styrene, or on other acrylic or vinyl monomers, diene elastomers, and their blends.

3. Material according to Claim 1 or 2, **characterized in that** the ratio of the percentage of crosslinking bridges having covalent bonds to the percentage of crosslinking bridges having noncovalent bonds is comprised between 99/1 and 1/99 and preferably comprised between 90/10 and 20/80.

4. Process for the preparation of a crosslinked thermoplastic material based on a flexible polymer comprising the following stages:
(a) the permanent chemical crosslinking of said polymer,
(b) the physical crosslinking of said polymer (i) by grafting of associative groups based on a nitrogenous heterocycle or (ii) by functionalization during the polymerization of said polymer with comonomers carrying associative groups based on a nitrogenous heterocycle, said nitrogenous heterocycle being an imidazolidinyl group.

5. Process according to Claim 4, **characterized in that** stage b) is carried out by reaction of said polymer with a modifying agent carrying, on the one hand, an associative group based on a nitrogenous heterocycle and, on the other hand, a reactive group chosen, for example, from amine, mercaptan, epoxy, isocyanate, anhydride, alcohol or acid groups, preferably an amine group, said reactive group forming a covalent bond with a reactive functional group, such as an acid, anhydride, alcohol, mercaptan, amine, epoxy or isocyanate functional group, preferably an anhydride functional group, carried by said polymer.

6. Process according to either one of Claims 4 and 5, **characterized in that** the degree of modification of the polymer by grafts or comonomers carrying the associative groups is from 0.1 to 20% by weight of modifying agent with respect to the polymer.

7. Process according to any one of Claims 4 to 6, **characterized in that** stages a) and b) (i) can take place in any order or be simultaneous.

8. Use of a material according to any one of Claims 1 to 3 in the manufacture of articles chosen from leaktight seals, thermal or acoustic insulators, tires, cables, sheaths, footwear soles, packagings, coatings, patches, systems for trapping and releasing active principles, dressings, elastic clamp collars, vacuum pipes, pipes and flexible tubing for the transportation of fluids, adhesive or cosmetic compositions, and ink, varnish or paint formulations.
